# FASCICULE DE BREVET EUROPEEN

(11) **EP 2 124 686 B1**
(45) Date de publication et mention de la délivrance du brevet: **25.08.2010**
(21) Numéro de dépôt: 07872441.6
(22) Date de dépôt: 26.12.2007
(51) Int. Cl.: A47J 27/08

(54) **APPAREIL DE CUISSON SOUS PRESSION A EFFORT D'OUVERTURE / FERMETURE VARIABLE**
SCHNELLKOCHTOPF, IN DEM DIE ZUM ÖFFNEN UND SCHLIESSEN DES TOPFES ERFORDERLICHE KRAFT VARIIERT
PRESSURE-COOKING APPLIANCE IN WHICH THE FORCE REQUIRED TO OPEN AND CLOSE SAME IS VARIABLE

(30) Priorité: 28.12.2006 FR 0611476
(43) Date de publication de la demande: 02.12.2009
(73) Titulaire: SEB S.A., F-69132 Ecully Cedex (FR)
(72) Inventeur: CHAMEROY, Eric, F-21260 Veronnes (FR); SEURAT GUIOCHET, Claire, Marie-Aurore, F-21490 Bretigny (FR)
(74) Mandataire: Weber, Jean-François
(86) Numéro de dépôt international: PCT/FR2007/002164
(87) Numéro de publication internationale: WO 2008/102071

(56) Documents cités:
- WO-A-2006/056253
- DE-C- 856 952

## Description

### DOMAINE TECHNIQUE

La présente invention se rapporte au domaine technique général des appareils de cuisson d'aliments, notamment de nature domestique, destinés à former une enceinte de cuisson hermétique au sein de laquelle sont cuits les aliments sous pression de vapeur.

La présente invention concerne plus particulièrement un appareil de cuisson sous pression à couvercle rentrant comprenant au moins :
- une cuve et un couvercle conçu pour être rapporté dans la cuve avec une faculté de mobilité entre au moins d'une part une position de fermeture dans laquelle il forme avec la cuve une enceinte de cuisson sensiblement étanche, et d'autre part une position d'ouverture dans laquelle il permet la communication de l'intérieur de l'enceinte avec l'extérieur,
- et un moyen de commande du déplacement du couvercle entre ses positions de fermeture et d'ouverture, ledit moyen de commande comprenant une pièce de transmission d'effort montée à pivotement selon un premier axe, le couvercle étant suspendu en une zone d'accrochage à ladite pièce de transmission d'effort.

### TECHNIQUE ANTERIEURE

Les appareils de cuisson sous pression, en particulier à usage domestique, du genre autocuiseur, sont bien connus dans l'art antérieur. De tels appareils comprennent généralement une cuve et un couvercle destiné à être rapporté sur la cuve pour former une enceinte de cuisson hermétiquement close au sein de laquelle sont placés les aliments à cuire. L'intérieur de l'enceinte peut ainsi atteindre des pression et température élevées lorsque l'appareil est soumis à l'influence d'une source de chauffe.

Il existe différents moyens pour réaliser un verrouillage hermétique réversible du couvercles sur la cuve. On connaît en particulier des appareils de cuisson sous pression mettant en oeuvre:
- une cuve constituée d'un fond à partir et à la périphérie duquel s'élève une paroi latérale se terminant par un bord rentrant qui lui-même s'étend, à partir de la paroi latérale, de façon centripète vers l'intérieur de la cuve; ledit bord rentrant délimite une ouverture d'accès à l'intérieur de la cuve et présente une face interne située en regard de l'intérieur de la cuve ;
- et un couvercle destiné à être introduit à l'intérieur de la cuve, sous la face interne du bord rentrant, pour venir ensuite être hermétiquement plaqué contre ladite face interne, réalisant ainsi avec la cuve une enceinte de cuisson étanche.

De tels appareils sont habituellement désignés dans le domaine technique sous l'appellation « *autocuiseurs à couvercle rentrant* », dans la mesure où ils mettent en oeuvre un couvercle qui doit d'abord être rentré dans la cuve avant de venir en contact étanche avec le rebord supérieur centripète de cette dernière.

Il existe de surcroît différentes technologies d'autocuiseurs à couvercle rentrant.

On connaît ainsi les autocuiseurs « *à trou d'homme* », qui mettent en oeuvre d'une part une cuve dont le bord supérieur rentrant délimite une ouverture ovale et d'autre part un couvercle de forme conjuguée ovale. Cette conjugaison de formes ovales permet d'introduire entièrement le couvercle à l'intérieur de la cuve, puis, une fois qu'il est positionné sous le bord rentrant centripète, de l'aligner avec l'ouverture de cuve pour qu'il vienne se plaquer de manière étanche contre ledit bord rentrant. La conception de ces appareils « *à trou d'homme* » interdit bien entendu par nature l'utilisation de couvercles circulaires.

Il existe toutefois des autocuiseurs à couvercle rentrant permettant la mise en oeuvre de couvercles circulaires. Ces appareils sont généralement connus sous l'appellation « *autocuiseurs à couvercle flexible* ». Ces appareils sont basés sur le principe de l'utilisation d'un couvercle capable de passer, sous l'effet d'une sollicitation mécanique en flexion, d'une configuration géométrique de repos permettant l'introduction du couvercle dans la cuve, à une configuration géométrique déformée permettant de réaliser la fermeture hermétique de la cuve.

On connaît ainsi un autocuiseur à couvercle flexible comprenant une cuve dont le bord rentrant délimite une ouverture de cuve circulaire et un couvercle obtenu à partir d'uri flan métallique circulaire routé.

Dans sa configuration de repos, le couvercle présente une forme de disque « *roulé* », c'est à dire cintré, qui lui permet d'être introduit au sein de la cuve sous le bord rentrant.

Dans sa configuration déformée le couvercle présente une forme de disque sensiblement plat, qui lui permet de venir en appui continu et uniforme contre la face interne du bord rentrant, de façon à former une enceinte étanche. A cet effet, le bord rentrant de la cuve est équipé, dans la zone de contact avec le couvercle, d'un joint d'étanchéité annulaire.

Cet appareil à couvercle flexible connu est également doté d'un moyen de commande du déplacement du couvercle comprenant un levier monté pivotant sur un support solidaire d'un étrier, ledit étrier étant lui-même destiné à venir en appui contre la cuve, à l'extérieur de cette dernière, au-dessus du bord rentrant centripète. Le levier est relié au couvercle par l'intermédiaire d'une biellette permettant d'exercer un effort de traction sur le centre du couvercle.

Le fonctionnement de cet autocuiseur connu est le suivant.

Le couvercle, dans sa configuration de repos, est introduit à l'intérieur de la cuve sous le bord rentrant de cette dernière, tandis que l'étrier vient en appui sur et contre la cuve, au-dessus dudit bord rentrant. L'utilisateur actionne alors le levier en rotation ce qui a pour effet d'exercer sur le centre du couvercle un effort de rapprochement du couvercle et de l'étrier, ce dernier restant fixe en position. Le couvercle vient alors en appui contre et sous le bord rentrant de la cuve et se déformé ensuite en flexion jusqu'à atteindre sa configuration déformée, dans laquelle sa périphérie est uniformément plaquée contre le bord rentrant de la cuve, ce qui permet de réaliser une enceinte de cuisson étanche. L'utilisateur soumet ensuite l'enceinte de cuisson étanche ainsi formée à une sources de chaleur, de manière à augmenter la température et la pression régnant au sein de l'enceinte et cuire les aliments présents dans l'enceinte sous pression de vapeur.

Cet appareil de l'art antérieur, s'il donne généralement satisfaction, n'en présente pas moins un certain nombre d'inconvénients.

Ainsi, la fermeture du couvercle pour obtenir une enceinte de cuisson étanche demande à l'utilisateur d'exercer sur le levier rotatif un effort qui se met à croître de manière significative lorsque le couvercle entame sa déformation en flexion. Plus précisément, l'effort exercé par l'utilisateur correspond dans un premier temps à l'effort nécessaire pour surmonter le poids du couvercle et amener ce dernier en appui contre et sous le bord rentrant de la cuve.

Une fois le couvercle en appui contre et sous le bord rentrant de la cuve, l'effort exercé par l'utilisateur est utilisé pour déformer en flexion le couvercle, à l'encontre de la réaction élastique (mémoire de forme) exercée par ce dernier. Cette réaction élastique est supérieure au poids du couvercle, de sorte que l'utilisateur doit exercer, à partir du moment où le couvercle vient en appui contre et sous le bord rentrant de la cuve, un effort supérieur à celui qu'il avait exercé pour soulever le couvercle jusqu'à l'amener en appui contre le bord rentrant.

L'utilisateur perçoit donc une difficulté à faire pivoter le levier pour amener le couvercle en position de verrouillage, dans la mesure où il doit accroître son effort sur le levier, vers la fin de course de ce dernier, pour achever le verrouillage étanche de l'enceinte. Cet accroissement de l'effort va bien entendu à l'encontre de l'ergonomie et du confort d'utilisation que les consommateurs attendent d'un tel appareil de cuisson.

Le document WO-A-2006/056 253 décrit un appareil de cuisson selon le préambule de la revendication 1.

### EXPOSE DE L'INVENTION

Les objets assignés à la présente invention visent en conséquence à remédier aux différents inconvénients énumérés précédemment et à proposer un nouvel appareil de cuisson sous pression à couvercle rentrant dont la conception permet de régler finement le niveau d'effort à exercer par l'utilisateur pour déplacer le couvercle entre ses positions d'ouverture et de fermeture.

Un autre objet de l'invention vise à proposer un nouvel appareil de cuisson sous pression à couvercle rentrant dont la gestuelle d'utilisation reste aussi simple que celle des appareils de l'art antérieur.

Un autre objet de l'invention vise à proposer un nouvel appareil de cuisson sous pression à couvercle rentrant dont la conception permet d'éviter à l'utilisateur d'avoir à exercer une force croissante pour amener le couvercle de sa position d'ouverture à sa position de fermeture.

Un autre objet de l'invention vise à proposer un nouvel appareil de cuisson sous pression à couvercle rentrant de construction particulièrement compacte et économique

Un autre objet de l'invention vise à proposer un nouvel appareil de cuisson sous pression à couvercle rentrant de conception particulièrement simple.

Un autre objet de l'invention vise à proposer un nouvel appareil de cuisson sous pression à couvercle rentrant déformable permettant à l'utilisateur de ne pas percevoir l'augmentation d'effort nécessaire pour déformer le couvercle.

Les objets assignés à l'invention sont atteints à l'aide d'un appareil de cuisson sous pression à couvercle rentrant comprenant au moins :
- une cuve et un couvercle conçu pour être rapporté dans la cuve avec une faculté de mobilité entre au moins d'une part une position de fermeture dans laquelle il forme avec la cuve une enceinte de cuisson sensiblement étanche, et d'autre part une position d'ouverture dans laquelle il permet la communication de l'intérieur de l'enceinte avec l'extérieur,
- un moyen de commande du déplacement du couvercle entre ses positions de fermeture et d'ouverture, ledit moyen de commande comprenant une pièce de transmission d'effort montée à pivotement selon un premier axe, le couvercle étant suspendu en une zone d'accrochage à ladite pièce de transmission d'effort,
lendit appareil étant **caractérisé en ce qu**'il comprend un moyen pour faire varier la distance entre la zone d'accrochage et le premier axe.

### DESCRIPTIF SOMMAIRE DES DESSINS

D'autres objets et avantages particuliers de l'invention apparaîtront plus en détails à la lecture de la description qui suit, ainsi qu'à l'aide des dessins annexés, fournis à titre purement illustratif et non limitatif, parmi lesquels :
- La figure 1 illustre, selon une vue en perspective, un appareil de cuisson à couvercle flexible conforme à l'invention avec son moyen de commande du déplacement du couvercle dans une deuxième position, correspondant à une première position d'ouverture du couvercle (position stable d'ouverture complète de l'enceinte).
- La figure 2 illustre, selon une vue schématique en coupe, l'appareil de cuisson de la figure 1.
- La figure 3 illustre, selon une vue schématique en perspective, le couvercle de l'appareil illustré aux figures 1 et 2 sur lequel est rapporté et fixé un sous-ensemble mécanique incorporant le moyen de commande du déplacement du couvercle.
- La figure 4 illustre, selon une vue schématique en coupe, l'appareil de cuisson des figures 1 et 2 avec son moyen de commande du déplacement du couvercle qui se trouve cette fois dans une position médiane, correspondant à une seconde position d'ouverture du couvercle (ouverture incomplète de l'enceinte).
- La figure 5 illustre, selon une vue schématique en coupe, l'appareil de cuisson des figures 1, 2, et 4 avec son moyen de commande du déplacement du couvercle qui se trouve cette fois dans une première position intermédiaire située entre sa deuxième position et sa position médiane, position intermédiaire correspondant à une troisième position d'ouverture du couvercle (ouverture incomplète de l'enceinte).
- La figure 6 illustre, selon une vue schématique en coupe, l'appareil de cuisson des figures 1, 2, 4 et 5 avec son moyen de commande du déplacement du couvercle qui se trouve cette fois dans une deuxième position intermédiaire correspondant à une première position de fermeture du couvercle (fermeture non verrouillée de l'enceinte).
- La figure 7 illustre, selon une vue schématique en coupe, l'appareil de cuisson des figures 1, 2 et 4 à 6 avec son moyen de commande du déplacement du couvercle qui se trouve cette fois dans une première position correspondant à une deuxième position de fermeture du couvercle (fermeture étanche et verrouillée due l'enceinte).
- La figure 8 illustre, selon une vue schématique en perspective, l'appareil de la figure 7.
- La figure 9 illustre, selon une vue schématique en écorché, l'appareil de cuisson des figures 7 et 8.
- La figure 10 illustre schématiquement, de façon superposée, les différentes positions de la zone d'accrochage relativement à la pièce de transmission d'effort lorsque l'appareil de cuisson occupe respectivement ses configurations illustrées aux figures 4 à 6.
- La figure 11 représente, selon une vue éclatée, le sous-ensemble mécanique illustré notamment à la figure 3.

### MEILLEURE MANIERE DE REALISER L'INVENTION

L'appareil de cuisson sous pression 1 conforme à l'invention est destiné à assurer la cuisson d'aliments, sous pression de vapeur. De façon préférentielle, l'appareil de cuisson sous pression 1 est constitué par un appareil de cuisson sous pression domestique, conçu pour une utilisation dans un contexte familial.

Par souci de simplicité de description, il sera exclusivement fait référence dans ce qui suit, en relation avec les dessins annexés, à un appareil 1 constitué par un tel autocuiseur domestique, étant entendu que l'invention peut toutefois également concerner des appareils de type professionnel ou semi-professionnel.

Conformément à l'invention, l'appareil 1 comprend au moins une cuve 2 qui forme un récipient de cuisson, c'est-à-dire que ladite cuve 2 est destinée à accueillir les aliments soit directement, soit par l'intermédiaire d'un panier de cuisson (non représenté) inséré dans la cuve 2 et contenant lesdits aliments. La cuve 2 présent par exemple, tel que cela est illustré aux figures, une symétrie de révolution selon un axe X-X'. Dans ce qui suit, l'adjectif « axial » se réfère à la direction de cet axe de symétrie X-X', direction qui s'apparente à la direction verticale lorsque l'appareil 1 est en fonctionnement normal. Bien évidemment, la cuve 2 peut tout à fait ne pas affecter une forme de révolution (et être par exemple de forme ovale), sans pour autant que l'on sorte du cadre de l'invention.

Conformément à l'invention, l'appareil de cuisson sous pression 1 comporte également au moins un couvercle 3 destiné à coopérer avec la cuve 2 pour former avec cette dernière une enceinte de cuisson.

Selon l'invention, l'appareil de cuisson 1 est un appareil à couvercle rentrant. Cela signifie que pour former, à l'aide de la cuve 2 et du couvercle 3, unes enceinte étanche de cuisson, il est nécessaire d'introduire tout d'abord entièrement le couvercle 3 à l'intérieur de la cuve 2, sous le bord libre supérieur de cette dernière, ledit bord libre délimitant l'ouverture d'accès à l'intérieur de la cuve 2, puis d'imprimer audit couvercle 3 un mouvement vertical de bas en haut pour que le couvercle 3 vienne en appui étanche contre et sous ledit bord libre supérieur, pour obtenir une enceinte de cuisson hermétiquement close.

Ce principe général sous-tendant la construction et le fonctionnement des appareils de cuisson sous pression à couvercle rentrant est bien connu en tant que tel.

La cuve 2 est de manière classique fabriquée à partir d'un matériau métallique tel que de l'acide inoxydable ou de l'aluminium, et comporte un fond 2A qui affecte par exemple une forme discoïde et est éventuellement pourvu d'un assemblage composite thermo-conducteur, rapporté par exemple par frappe à chaud. Comme illustré aux figures, la cuve 2 comporte une paroi latérale 2B qui, de préférence, présente une forme annulaire et s'élève à partir et à la périphérie du fond 2A. Un bord rentrant 2C s'étend de façon centripète à partir de la paroi latérale 2B. Ce bord rentrant 2C présente une face interne 20C située en regard de l'intérieur de la cuve 2, c'est à dire orientée vers le fond 2A.

De préférence, tel que cela est illustré aux figures, la paroi latérale 2B s'étend entre une extrémité inférieure 20B reliée à la périphérie du fond 2A et une extrémité supérieure 21B prolongée par le bord rentrant 2C, lequel converge radialement vers le centre de la cuve 2, c'est à dire en direction de l'axe X-X'. De préférence, le bord rentrant 2C comprend un tronçon sensiblement conique 21C qui s'étend dans le prolongement de la paroi latérale 2B, ledit tronçon conique 21C se terminant par un bord roulé 22C ménageant un logement destiné à accueillir un joint d'étanchéité annulaire 4, lequel vient habiller la face interne 20C du bord rentrant 2C. Le bord rentrant centripète 2C délimite une ouverture d'accès à l'intérieur de la cuve 2, par laquelle peuvent être introduits non seulement les aliments à cuire, mais également le couvercle 3.

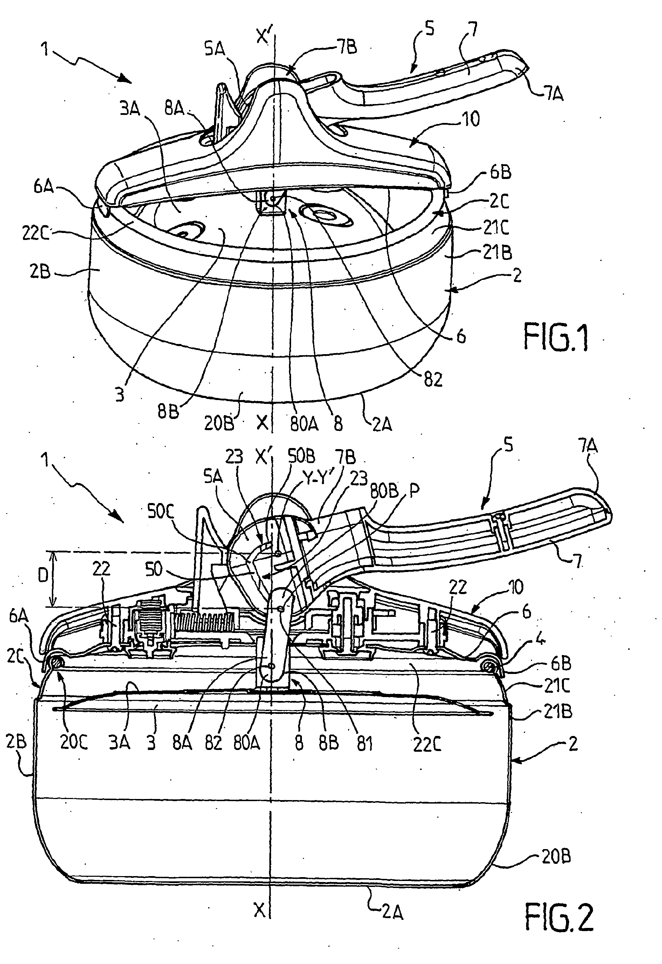

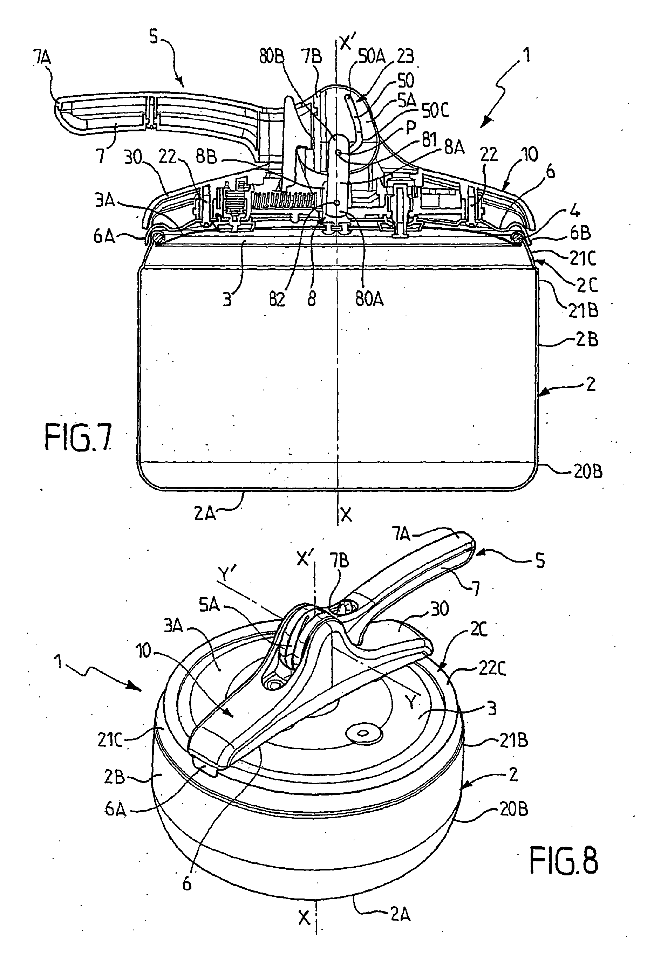

Conformément à l'invention, le couvercle 3 est conçu pour être rapporté dans la cuve 2 avec une faculté de mobilité entre au moins :
- d'une part au moins une position de fermeture (illustrée aux figures 7 et 8) dans laquelle il forme avec la cuve 2 une enceinte de cuisson sensiblement étanche, c'est à dire suffisamment hermétique pour permettre une montée en pression en son sein ; il est tout à fait envisageable que le couvercle 3 puisse atteindre une pluralité de positions de fermeture distinctes dans lesquelles il forme avec la cuve 2 une enceinte de cuisson étanche ;
- et d'autre part au moins une position d'ouverture (illustrée aux figures 1 et 2), dans laquelle il permet la communication de l'intérieur de l'enceinte avec l'extérieur, de façon à ce que la pression régnant dans l'enceinte corresponde sensiblement à la pression atmosphérique; il est tout à fait envisageable, comme cela est d'ailleurs le cas pour la variante illustrée aux figures (les figures 2, 4 et 5 illustrent respectivement des positions d'ouvertures différentes, la positon de la figure 2 étant une position stable de butée correspondant à l'ouverture complète de l'enceinte), que le couvercle 3 puisse atteindre une pluralité de positions d'ouverture distinctes dans lesquelles il forme avec la cuve 2 une enceinte de cuisson ouverte.

En d'autres termes, conformément à l'invention, le couvercle 3 peut rapporter dans la cuve 2, c'est à dire être inséré à l'intérieur de cette dernière, selon un positionnement prédéterminé, positionnement dans lequel il conserve une possibilité de se déplacer de façon contrôlée entre ses postions de fermeture et d'ouverture.

Dans le mode de réalisation illustré aux figures, lorsque le couvercle 3 se trouve en position de fermeture, il vient en contact sensiblement étanche, par sa face supérieure 3A, contre la face interne 20C du bord rentrant 2C.

Au contraire, lorsque le couvercle 3 se trouve en position d'ouverture, il se trouve à distance du bord rentrant 2C, empêchant ainsi toute montée en pression de l'enceinte. Le passage de la position d'ouverture à la position de fermeture (et vice versa) s'effectue préférentiellement par un mouvement de translation verticale du couvercle 3 de bas en haut (respectivement de haut en bas).

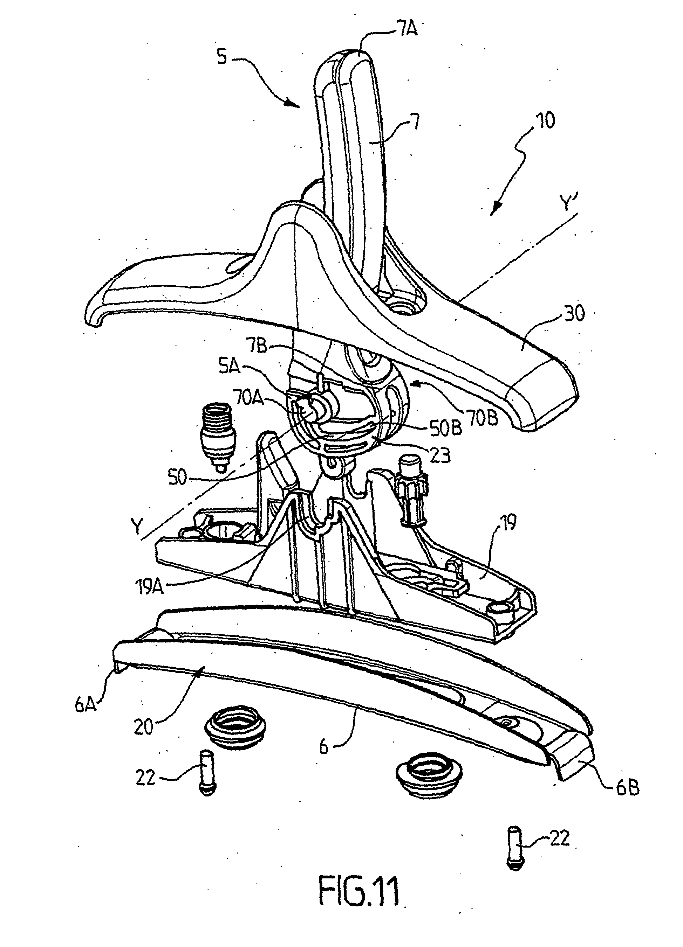

Afin de rapporter le couvercle 3 dans la cuve 2, l'appareil 1 conforme à l'invention comprend avantageusement un sous-ensemble 10 (illustré seul sur la figure 11) relié mécaniquement au couvercle 3, ledit sous-ensemble 10 étant destiné à venir reposer en appui contre et sur la cuve 2. Le couvercle 3 est monté mobile relativement au sous-ensemble 10 entre deux positions extrêmes qui, lorsque le sous-ensemble 10 repose de façon fixe et immobile contre le bord de cuve 22C (tel qu'illustré par exemple à la figure 1), correspondent respectivement aux positions d'ouverture et de fermeture. Au sens de l'invention, on considère donc que le couvercle 3 est rapporté dans la cuve 2 lorsqu'une pièce d'accostage (formée en l'occurrence par le sous-ensemble 10) reliée au couvercle 3 vient s'immobiliser en appui contre la cuve 2, le couvercle 3 se trouvant alors prépositionné au sein de la cuve 2, sous le bord rentrant 2C, avec une possibilité de se déplacer relativement à ladite pièce d'accostage et à la cuve.

Dans ce qui suit, on s'attachera exclusivement, pour des raisons de simplicité de description, à décrire un autocuiseur à couvercle rentrant pourvu d'un couvercle 3 déformable, c'est-à-dire dont la forme peut être modifiée par application d'une sollicitation mécanique commandée par l'utilisateur.

L'invention n'est toutefois pas limitée à un type particulier d'autocuiseur à couvercle rentrant, et son enseignement s'applique également pleinement à d'autres types d'autocuiseurs à couvercle rentrant, et notamment aux autocuiseurs à trou d'homme.

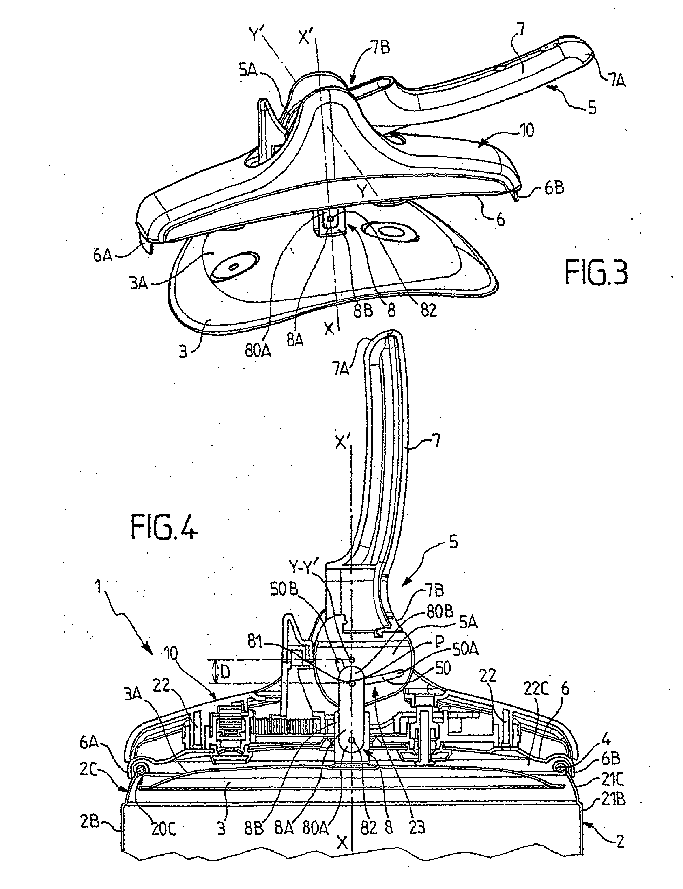

Conformément au mode de réalisation illustré aux figures, le couvercle 3 est donc un couvercle déformable susceptible d'évoluer entre d'une part une configuration géométrique de repos (illustrée à la figure 3) correspondant à sa position d'ouverture et permettant l'introduction du couvercle 3 dans la cuve 2 sous la face interne 20C du bord rentrant 2C et d'autre part une configuration géométrique déformée (représentée à la figure 7) correspondant à sa position de fermeture et permettant au couvercle de venir en contact sensiblement étanche contre la face interne 20C du bord rentrant 2C, cette dernière étant préférentiellement habillée par le joint d'étanchéité 4.

Afin de permettre à l'utilisateur d'ouvrir et fermer à volonté l'enceinte de cuisson, le couvercle 3 est préférentiellement un couvercle déformable de façon réversible. Cela signifie que le couvercle 3 est réalisé dans un matériau élastique et est sollicité en déformation à l'intérieur du domaine élastique dudit matériau. De façon préférentielle, le couvercle 3 est un couvercle flexible, c'est-à-dire qu'il est conçu pour changer de forme sous l'effet d'une sollicitation mécanique en flexion. Par exemple, tel que cela est bien connu en tant que tel dans l'art antérieur, le couvercle 3 est constitué d'un flan métallique discoïde qui a subi un roulage de telle sorte qu'il affecte au repos, en l'absence de sollicitation mécanique extérieure de déformation, une forme de selle; c'est à dire une forme courbe sensiblement en U (par exemple visible sur les figures 1 et 3).

En d'autres termes, le couvercle 3 présente avantageusement au repos (en l'absence de sollicitation de déformation) une forme de disque cintré, qui correspond en vue de dessus à une ellipse.

Grâce à cette forme gauche, ledit couvercle 3 peut être inséré à l'intérieur de la cuve 2 à travers l'orifice délimité par le bord rentrant 2C, alors que le diamètre du flan discoïde (avant cintrage) à partir duquel est constitué le couvercle 3 est supérieur à celui de l'ouverture de cuve 2. La figure 1 représente notamment le couvercle 3 alors qu'il est inséré à l'intérieur de la cuve 2, sous le bord rentrant 2C.

Conformément à l'invention, l'appareil de cuisson sous pression 1 comprend également un moyen de commande 5 du déplacement du couvercle 3 entre ses positions de fermeture et d'ouverture, ledit moyen de commande 5 étant monté mobile entre au moins une première position (illustrée notamment aux figures 7 et 8) correspondant à la position de fermeture du couvercle 3 et une deuxième position (illustrée notamment aux figures 1 et 2) correspondant à la position d'ouverture du couvercle 3. Par exemple, dans le mode de réalisation illustré aux figures, le moyen de commande 5 du déplacement du couvercle 3 est conçu pour exercer un effort sensiblement vertical, selon l'axe X-X', ledit effort étant préférentiellement appliqué au centre du couvercle 3 et permettant de faire passer le couvercle 3 :
- de sa position d'ouverture (illustrée aux figures 1 et 2) à sa position de fermeture (illustrée à la figure 7) par traction verticale du bas vers le haut,
- et inversement, de sa position de fermeture (illustrée à la figure 7) à sa position d'ouverture (illustrée aux figures 1 et 2) par relâchement de l'effort de traction exercé, le couvercle 3 retournant en position d'ouverture sous les effets conjugués de son retour élastique et de son propre poids.

Dans le cas, illustré aux figures, d'un autocuiseur à couvercle flexible, le moyen de commande 5 exerce une double fonction, savoir une fonction de commande du déplacement du couvercle 3 et une fonction de commande de la déformation (en flexion) du couvercle 3, ces fonctions intervenant successivement.

En effet, sous l'effet de l'effort de traction verticale exercé par le moyen de commande 5 au niveau du centre du couvercle 3, selon des modalités qui vont être expliquées plus en détails dans ce qui suit, le couvercle 3 va tout d'abord se déplacer globalement selon un trajet vertical parallèle à l'axe X-X' jusqu'à venir en butée, vers sa périphérie, contre le bord rentrant 2C, lequel est habillé sur sa face interne 20C par le joint annulaire d'étanchéité 4. L'effort de traction du bas vers le haut exercé par le moyen de commande 5 est alors poursuivi tandis que le couvercle 3 est en appui contre le bord rentrant 2C (par l'intermédiaire du joint d'étanchéité 4 interposé entre la face supérieure du couvercle 3 et la face inférieure 20C du bord rentrant 2C), ce qui occasionne alors une déformation élastique en flexion du couvercle 3. Cette déformation conduit le couvercle 3 à adopter une forme de disque sensiblement plat (et non plus cintré), forme lui permettant d'épouser de façon sensiblement uniforme et continue, sur sensiblement toute sa périphérie, le bord rentrant 2C. On obtient ainsi une enceinte de cuisson suffisamment étanche pour permettre la cuisson des aliments à une pression supérieure à la pression atmosphérique. En d'autres termes, dans le mode de réalisation illustré aux figures, le moyen de commande 5 du déplacement du couvercle 3 commande non seulement le déplacement proprement dit du couvercle 3 mais également le passage dudit couvercle de sa configuration géométrique de repos à sa configuration géométrique déformée et vice versa. Le passage d'une configuration géométrique à l'autre est donc commandée par le moyen de commande 5 du déplacement du couvercle 3.

Conformément à l'invention, le moyen de commande 5 du déplacement du couvercle 3 comprend une pièce de transmission d'effort 5A montée à pivotement selon un premier axe Y-Y', lequel s'étend préférentiellement, tel que cela est illustré aux figures, perpendiculairement à l'axe X-X', selon la direction horizontale.

Conformément à l'invention, le couvercle 3 est suspendu en une zone d'accrochage P à la pièce de transmission d'effort 5A, c'est à dire que le couvercle 3 est attaché à la pièce de transmission d'effort 5A, la zone d'attache du couvercle 3 sur la pièce 5A correspondant à la zone d'accrochage P. Au sens de l'invention, la zone d'accrochage P correspond au point d'application de la force exercée par le poids du couvercle 3 sur la pièce de transmission d'effort 5A, lorsque le couvercle 3 est rapporté dans la cuve 2.

De préférence, la zone d'accrochage P présente un caractère ponctuel, c'est à dire que la zone d'accrochage P correspond dans ce cas à un point d'accrochage P (tel qu'illustré aux figures).

Il est cependant tout à fait envisageable que la zone d'accrochage P comporte plusieurs points d'accrochage, ladite zone d'accrochage P pouvant de surcroît présenter un caractère discret (points d'accrochage séparés les uns des autres) ou continu (zone d'accrochage bi-dimensionnelle ou tridimensionnelle).

Selon l'exemple de réalisation préférentiel illustré aux figures, l'appareil 1 comprend un étrier 6 formant pièce d'accostage avec la cuve 2, ledit étrier 6 étant destiné à venir en appui sur la cuve 2, et plus précisément sur le bord rentrant 2C, contre la face externe de ce dernier. L'étrier 6 est ainsi conçu pour être disposé en travers de l'ouverture de la cuve 2, de manière à venir en appui externe sur le bord rentrant 2C, en deux régions diamétralement opposées, tel que cela est illustré aux figures.

L'étrier 6, qui est avantageusement incorporé dans le sous-ensemble 10, est préférentiellement formé d'une plaque métallique allongée s'étendant longitudinalement entre deux extrémités opposées pourvues chacune d'un bord tombant respectif 6A, 6B permettant d'assurer un positionnement correct, centré, de l'étrier 6 sur la cuve 2.

Au sens de l'invention, on considère que le couvercle 3 est rapporté dans la cuve 2 lorsque l'étrier 6 (ou tout autre moyen équivalent) repose sur et au-dessus de la cuve 2, en prenant appui sur le bord supérieur (formé ici par le bord rentrant 2C) de la cuve 2 tel qu'illustré par exemple à la figure 1.

Le moyen de commande 5 du déplacement du couvercle 3 comprend de façon avantageuse un levier 7 mobile conçu pour être actionné manuellement par l'utilisateur. Ce levier 7 actionnable manuellement est avantageusement monté mobile relativement à l'étrier 6, au sein du sous-ensemble 10. De préférence, le levier 7 est monté à pivotement relativement à l'étrier 6 selon le premier axe Y-Y' entre au moins d'une part une première position (illustrée aux figures 7 et 8) correspondant à la première position du moyen de commande 5 et à la position de fermeture du couvercle 3, et d'autre part une deuxième position (illustrée aux figures 1 et 2) correspondant à la deuxième position du moyen de commande 5 et à la position d'ouverture du couvercle 3. De préférence, la position du premier axe Y-Y' est fixe par rapport à l'étrier 6, c'est à dire que la distance entre l'étrier 6 et ledit premier axe Y-Y' est constante et ne varie pas sous l'effet de la rotation du levier 7.

De préférence, la pièce de transmission d'effort 5A est solidaire du levier 7 et, de manière encore plus préférentielle (comme illustré aux figures) vient de matière avec ledit levier 7. En d'autres termes, selon ce mode de réalisation préférentiel, le levier 7 et la pièce de transmission d'effort 5A forment une seule et même pièce d'un seul tenant, réalisée par exemple par moulage de matière plastique. Dans ce cas, le levier 7 s'étend entre une extrémité libre 7A destinée à être saisie manuellement par l'utilisateur et une extrémité opposée 7B à partir de laquelle s'étend la pièce 5A, ladite pièce 5A étant montée à rotation autour du premier axe Y-Y' relativement à l'étrier 6.

De préférence, la pièce de transmission d'effort 5A est montée à rotation dans le sous-ensemble 10, selon des modalités constructives qui seront explicitées plus en détails dans ce qui suit.

Bien évidemment, l'invention n'est pas limitée à la mise en oeuvre d'une pièce de transmission d'effort 5A directement solidaire d'un levier rotatif 7. Il est par exemple tout à fait envisageable que la pièce de transmission d'effort 5A ne soit pas solidaire du levier 7, mais interagisse, par tout moyen mécanique d'entraînement connu (par exemple à l'aide d'un engrènement de roues dentées), avec ce dernier de manière à ce que le déplacement du levier 7 entraîne la rotation de la pièce de transmission 5A. L'invention n'est pas non plus limitée spécifiquement à la mise en oeuvre d'un levier 7 rotatif.

Il est par exemple envisageable de mettre en oeuvre un levier 7 monté à translation eut coopérant avec la pièce de transmission d'effort 5A, par l'intermédiaire d'un moyen de transformation de mouvement, pour convertir le mouvement de translation du levier 7en un mouvement de rotation de la pièce de transmission d'effort 5A.

Avantageusement, l'appareil 1 comprend un système de transmission d'effort 8 permettant d'établir une liaison mécanique entre la pièce de transmission d'effort 5A et le couvercle 3, pour que la rotation de la pièce de transmission d'effort 5A selon le premier axe Y-Y' entraîne l'exercice d'un effort de traction vers le haut sur le couvercle 3, lorsque la pièce de transmission d'effort 5A tourne dans le sens correspondant à la fermeture du couvercle 3. Préférentiellement, l'appareil 1 comprend au moins une biellette 8A s'étendant entre une première extrémité 80A reliée au couvercle 3 et une deuxième extrémité 80B reliée à la pièce de transmission d'effort 5A en un point formant la zone d'accrochage P.

Dans le cas de la variante illustrée aux figures, le levier 7 est ainsi relié, par l'intermédiaire du système de transmission d'effort 8, au couvercle 3 (et de préférence au centre dudit couvercle 3), pour que le pivotement du levier 7 de sa deuxième vers sa première position entraîne l'exercice d'un effort de traction vers le haut sur le couvercle 3 et réciproquement.

L'invention n'est bien entendu pas limitée à la mise en oeuvre spécifique, en tant que système de transmission d'effort 8, d'une biellette 8A.

Conformément à l'invention, l'appareil 1 comprend un moyen 23 pour faire varier la distance D séparant la zone d'accrochage P du premier axe Y-Y'. En d'autres termes, le moyen 23 est conçu pour régler la distance D, cette dernière étant par conséquent évolutive, c'est à dire qu'elle n'est pas fixée par construction, contrairement à la conception retenue dans les appareils de l'art antérieur. Grâce à cette caractéristique, il est possible de rendre également évolutif l'effort F exercé par l'utilisateur sur le moyen de commande 5 pour déplacer le couvercle 3 entre ses positions de fermeture et d'ouverture. Cela permet en particulier de compenser d'éventuelles surintensités d'effort provoquées par exemple par la déformation en flexion du couvercle 3. De préférence et comme illustré aux figures, le moyen 23 pour faire varier la distance D séparant la zone d'accrochage P du premier axe Y-Y' est conçu pour faire varier ladite distance D par déplacement de la zone d'accrochage P, l'axe Y-Y' restant fixe.

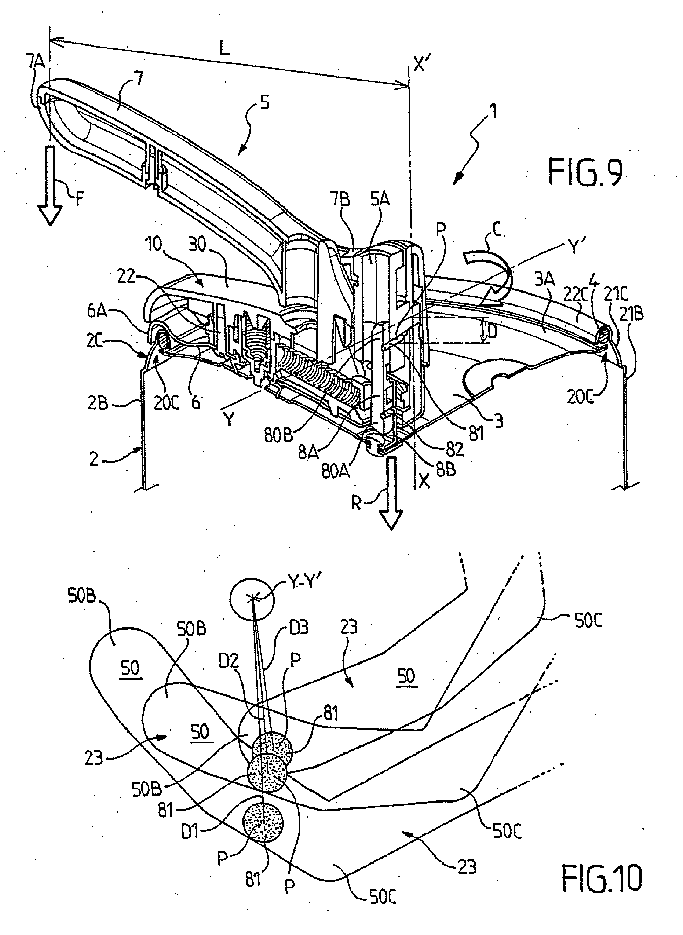

L'intérêt de l'invention sera mieux compris en se basant sur l'exemple de réalisation illustré aux figures, en référence en particulier à la figure 9.

La force F que doit exercer l'utilisateur au niveau de l'extrémité libre 7A du levier 7 peut en effet être approximativement calculée (au frottement mécanique près) grâce à la formule suivante : F = R x D / L
où F est la force exercée par l'utilisateur sur l'extrémité libre 7A, R est la force de réaction exercée par le couvercle 3, L est la distance entre l'extrémité libre 7A du levier 7 et l'axe de rotation Y-Y' de la pièce de transmission d'effort 5A et D est la distance entre la zone d'accrochage P et le premier axe Y-Y'.

Il ressort de cette formule que la force F à exercer par l'utilisateur est proportionnelle à la distance D ainsi qu'à la force de réaction R exercée par le couvercle 3 à l'encontre de la force F.

Par conséquent, l'invention permet, en faisant varier D, de compenser d'éventuelles variations de la force de réaction R, ce qui permet d'éviter à l'utilisateur de ressentir les variations en question. Dans l'exemple illustré aux figures, la force de réaction R exercée par le couvercle 3 résulte de la combinaison du poids du couvercle 3 d'une part, et de sa résistance élastique à la déformation en flexion d'autre part (retour élastique).

Bien entendu, l'invention n'est pas limitée à la mise en oeuvre d'un couvercle 3 flexible et il est tout à fait envisageable que l'effort R de réaction exercé par le couvercle 3 corresponde uniquement au poids du couvercle 3, auquel s'ajoute éventuellement un effort de réaction élastique dû à l'écrasement du joint d'étanchéité 4 (autocuiseur à trou d'homme).

Avantageusement, le moyen 23 pour faire varier la distance D séparant la zone d'accrochage P du premier axe Y-Y' coopère avec le moyen de commande 5 pour faire varier ladite distance D en fonction de la position du moyen de commande 5. Cela signifie que la valeur de la distance D entre la zone d'accrochage P et le premier axe Y-Y' est pilotée par la position du moyen de commande 5, de façon que la manipulation du moyen de commande 5 par l'utilisateur engendre concomitamment le réglage de laite distance D.

Par exemple, dans le mode de réalisation illustré aux figures, cette fonction est obtenue grâce au fait que la deuxième extrémité 80B de la biellette 8A est montée mobile relativement à la pièce de transmission d'effort 5A, c'est à dire que la deuxième extrémité 80B peut se déplacer relativement à la pièce de transmission d'effort 5A, tout en étant attachée à cette dernière, de façon à rapprocher ou éloigner la zone d'accrochage P de l'axe Y-Y'.

De manière préférentielle, la deuxième extrémité 80B de la biellette 8A est pourvue d'un premier tenon 81, tandis que la pièce de transmission d'effort 5A est pourvue d'une lumière de guidage 50 accueillant ledit tenon 81, ce dernier étant monté à glissement au sein de ladite lumière de guidage 50.

De préférence, le premier tenon 81 peut ainsi se déplacer en translation à l'intérieur et le long de la lumière 50, laquelle présente un caractère longiligne et s'étend longitudinalement entre une première et une seconde extrémités 50A, 50B, le premier tenon 81 pouvant ainsi circuler en translation au sein de la lumière 50 entre lesdites première et seconde extrémités 50A, 50B.

Bien évidemment, la circulation du premier tenon 81 est une circulation relative par rapport à la lumière 50, cette circulation pouvant être obtenue par déplacement de la lumière 50, déplacement du tenon 81 ou déplacement des deux.

Il est également envisageable que le premier tenon 81 puisse tourner sur lui-même au sein de la lumière de guidage 50, cette fonction de pivotement permettant à la biellette 8A d'assurer correctement sa fonction de transmission d'effort, tout en permettant au couvercle 3 de conserver un positionnement correct dans la cuve 2 en vue de son interaction avec cette dernière.

De préférence, la première extrémité 80A de la biellette 8A est également pourvue d'un deuxième tenon 82 qui tourillonne dans une pièce d'attache 8B en forme de U solidarisée au couvercle 3 (et de préférence au centre de ce dernier), par exemple par rivetage. La mise en oeuvre d'une biellette n'est absolument pas obligatoire, et il est par exemple tout à fait envisageable que le deuxième tenon 82 coopère directement avec la lumière 50.

Avantageusement, le moyen 23 pour faire varier la distance D entre la zone d'accrochage P et le premier axe Y-Y' est conçu pour que ladite distance D diminue lors du passage du couvercle 3 de sa position d'ouverture à sa position de fermeture.

Par exemple, dans le mode de réalisation illustré aux figures, cette fonction est obtenue grâce au fait que la distance séparant le premier axe Y-Y' de la première extrémité 50A de la lumière 50 est sensiblement supérieure à la distance séparant le premier axe Y-Y' de la seconde extrémité 50B de la lumière 50, le premier tenon 81 se trouvant vers la deuxième extrémité 50B lorsque le couvercle 3 est en position de fermeture et vers la première extrémité 50A lorsque le couvercle 3 est en position d'ouverture

Cette caractéristique technique permet de compenser l'augmentation de l'effort de réaction R exercé par le couvercle 3, de manière à ne pas faire ressentir cette augmentation à l'utilisateur exerçant la force de fermeture F sur le levier 7.

De préférence, le sous-ensemble 10 comprend, tel que cela est plus particulièrement visible sur la figure 11, une platine 19, réalisée par exemple par moulage de matière plastique. Le levier 7 est avantageusement monté à pivotement sur la platine 19 par l'intermédiaire d'une fourche 19A, qui de préférence vient de matière avec la platine 19, et sur laquelle vient tourillonner le levier 7 par l'intermédiaire d'ergots 70A, 70B formant arbres de rotation pour le levier 7. La platine 19 est de préférence elle-même incluse dans un boîtier dont la base 20 est constituée par l'étrier 6 tandis que la partie supérieure est constituée par un capot 30 rapporté sur l'étrier 6 et fixé à ce dernier par l'intermédiaire de vis 22 traversant la platine 19 grâce à des passages ménagés en son sein à cet effet. L'étrier 6 est pourvu d'un orifice permettant de laisser passer la biellette 8A, biellette 8A dont l'une des extrémités 80A est reliée au levier 7, de manière excentrée par rapport au centre de rotation dudit levier 7, tandis que l'autre extrémité 80B est assujettie au couvercle 3, par l'intermédiaire de la pièce d'attache 8B elle-même solidaire du centre du couvercle 3.

Le fonctionnement de l'appareil de cuisson 1 illustré aux figures est le suivant.

La cuve 2 est posée sur une source de chauffe, constituée par exemple par une plaque de cuisson. Des aliments sont disposés au sein de la cuve 2, éventuellement dans un panier de cuisson inséré lui-même dans la cuve 2. L'utilisateur saisit ensuite l'entité illustrée à la figure 3 constituée par l'assemblage du sous-ensemble 10 et du couvercle 3, en attrapant manuellement le sous-ensemble 10 qui fait en l'occurrence office de poignée de préhension. Il insère le couvercle 3 à l'intérieur de la cuve 2, sous le bord rentrant 2C. L'étrier 6 se trouve quant à lui à l'extérieur de la cuve 2 et repose sur la face externe du bord rentrant 2C. L'appareil de cuisson 1 se trouve à cet instant dans la configuration illustrée aux figures 1 et 2, dans laquelle le couvercle 3 est rapporté dans la cuve 2 et se trouve en position d'ouverture, suspendu à la pièce de transmission d'effort 5A par l'intermédiaire de la biellette 8A. A cet instant, le premier tenon 81 est positionné au niveau de la première extrémité 50A de la lumière de guidage 50.

L'utilisateur déplace ensuite le levier 7 en rotation selon une course angulaire en sens anti-horaire (défini par rapport aux figures) correspondant environ à un demi-cercle, et par exemple de l'ordre de 165°, de sa deuxième position (d'ouverture, illustrée à la figure 1) à sa première position (de fermeture, illustrée à la figure 7), en passant successivement par les trois positions intermédiaires illustrées respectivement aux figures 4, 5 et 6.

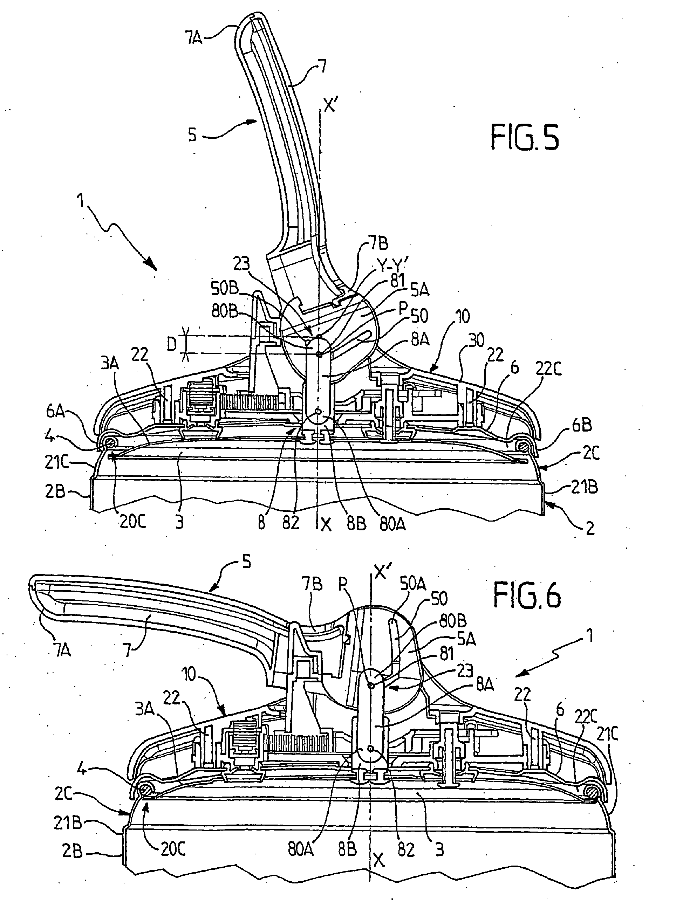

Cela a pour effet de transmettre, par l'intermédiaire de la biellette 8A, un effort de traction vers le haut sur le centre du couvercle 3, l'étrier 6 restant en permanence appuyé sur le bord de la cuve 2. Cet effort de traction permet dans un premier temps de déplacer le couvercle 3 vers le haut, jusqu'à ce que ce dernier vienne en appui contre le joint 4 équipant le bord rentrant 2C. Cette mise en appui se produit alors que le couvercle 3 se trouve dans une position intermédiaire située entre les positions illustrées respectivement aux figures 5 et 6.

Concomitamment au trajet vertical du couvercle 3 jusqu'à la mise en appui de ce dernier contre le bord rentrant 2C, le premier tenon 81 coulisse relativement à la lumière 50, dans un premier tronçon de cette dernière s'étendant à partir de la première extrémité 50A. Etant donné que, de façon préférentielle, le premier tronçon en question s'étend longitudinalement selon une première trajectoire qui se rapproche progressivement du premier axe de rotation Y-Y', le premier tenon 81 se rapproche progressivement du premier axe Y-Y', lequel reste fixe en position. Cette diminution progressive et continue de la distance D entre la zone d'accrochage P et le premier axe Y-Y' permet de progressivement diminuer l'effort F que doit exercer l'utilisateur pour déplacer le couvercle 3 vers le haut, en compensation de l'augmentation progressive de l'effort de réaction R exercé par le couvercle 3 et correspondant, jusqu'à ce que le couvercle 3 vienne en appui contre le joint 4, au poids du couvercle 3.

Une fois le couvercle 3 en appui contre le joint 4 équipant le bord rentrant 2C, l'utilisateur va exercer, en poursuivant la rotation du levier 7 dans le sens anti-horaire (défini relativement aux figures), un effort de traction sur le centre du couvercle 3, par l'intermédiaire de la biellette 8A.

Cet effort conduit à la déformation en flexion du couvercle 3, déformation qui elle-même conduit le couvercle 3 à adopter sa configuration géométrique déformée lui permettant de constituer avec la cuve 2 une enceinte de cuisson sensiblement étanche.

Le moyen de commande 5 assure alors une fonction de moyen de commande de la déformation du couvercle 3 (il est toutefois envisageable, sans pour autant que l'on sorte du cadre de l'invention, que le moyen de commande 5 assure non pas une double fonction comme dans l'exemple illustré aux figures, mais seulement la fonction de déplacement global du couvercle 3, par exemple selon un mode de réalisation correspondant à un autocuiseur à trou d'homme dans lequel le couvercle ovale vient simplement se plaquer de manière étanche contre le bord rentrant sans être ensuite déformé).

Concomitamment à la déformation en flexion du couvercle 3, qui se traduit par le déplacement local du centre du couvercle 3 vers le haut, le premier tenon 81 coulisse relativement à la lumière 50, dans un second tronçon de cette dernière qui s'étend dans le prolongement du premier tronçon jusqu'à la deuxième extrémité 50B de la lumière de guidage 50.

Le deuxième tronçon s'étend selon une deuxième trajectoire dont la pente est plus marquée que celle de la première trajectoire, de sorte que le deuxième tronçon se rapproche plus rapidement de l'axe Y-Y' que le premier tronçon. En d'autres termes, les premier et deuxième tronçons sont séparés par un point d'inflexion 50C. Le deuxième tronçon de la lumière 50 permet ainsi une diminution progressive rapide de la distance D, qui permet de compenser l'augmentation subite de l'effort de réaction R due à la déformation du couvercle 3. De façon préférentielle, le point d'inflexion 50C est positionné dans la lumière 50 pour être atteint par le premier tenon 81 lorsque le couvercle 3 arrive à proximité du bord rentrant 2C à partir de sa position d'ouverture.

La figure 10 illustre schématiquement les différentes positions relatives du premier tenon 81 et de la lumière 50 lorsque :
- l'appareil 1 se trouve dans la configuration illustrée à la figure 4 ; dans ce cas, la zone d'accrochage P se trouve à une distance D1 de l'axe Y-Y' ;
- l'appareil 1 se trouve dans la configuration illustrée à la figure 5 ; dans ce cas, la zone d'accrochage P se trouve à une distance D2 de l'axe Y-Y' avec D2 inférieure à D1 ;
- l'appareil 1 se trouve dans la configuration illustrée à la figure 6 ; dans ce cas, la zone d'accrochage P se trouve à une distance D3 de l'axe Y-Y' avec D3 inférieure à D2.

La trajectoire générale d'extension longitudinale de la lumière 50 est dans ce cas choisie pour que l'utilisateur ne perçoive pas de variation de l'effort F lorsqu'il entame et réalise la déformation du couvercle 3, l'augmentation de la réaction R due à l'apparition d'une composante de déformation du couvercle 3 étant compensée par la diminution progressive et continue de la distance D.

### POSSIBILITE D'APPLICATION INDUSTRIELLE

L'invention trouve son application industrielle dans la conception, la fabrication et l'utilisation d'appareils de cuisson.

## Revendications

1. Appareil de cuisson sous pression (1) à couvercle rentrant comprenant au moins :
- une cuve (2) et un couvercle (3) conçu pour être rapporté dans la cuve (2) avec une faculté de mobilité entre au moins d'une part une position de fermeture dans laquelle il forme avec la cuve (2) une enceinte de cuisson sensiblement étanche, et d'autre part une position d'ouverture dans laquelle il permet la communication de l'intérieur de l'enceinte avec l'extérieur,
- un moyen de commande (5) du déplacement du couvercle (3) entre - ses positions de fermeture et d'ouverture, ledit moyen de commande (5) comprenant une pièce de transmission d'effort (5A) montée à pivotement selon un premier axe (Y-Y'), le couvercle (3) étant suspendu en une zone d'accrochage (P) à ladite pièce de transmission d'effort (5A),
ledit appareil (1) étant **caractérisé en ce qu'**il comprend un moyen (23) pour faire varier la distance (D) séparant la zone d'accrochage (P) du premier axe (Y-Y').

2. Appareil (1) selon la revendication 1 **caractérisé en ce que** le moyen (23) pour faire varier la distance (D) séparant la zone d'accrochage (P) du premier axe (Y-Y') coopère avec le moyen de commande (5) pour faire varier ladite distance (D) en fonction de la position du moyen de commande (5).

3. Appareil (1) selon la revendication 1 ou 2 **caractérisé en ce que** le moyen pour faire varier la distance (D) séparant la zone d'accrochage (P) du premier axe (Y-Y') est conçu pour que ladite distance (D) diminue lors du passage du couvercle (3) de sa position d'ouverture à sa position de fermeture.

4. Appareil (1) selon l'une des revendications 1 à 3 **caractérisé en ce qu'**il comprend un étrier (6) destiné à venir en appui sur la cuve (2), le moyen de commande (5) comprenant un levier (7) actionnable manuellement et monté à pivotement relativement à l'étrier (6) selon le premier axe (Y-Y') entre une première position correspondant à la position de fermeture du couvercle (3) et une deuxième position correspondant à la position d'ouverture du couvercle (3), la pièce de transmission d'effort (5A) étant solidaire du levier (7).

5. Appareil (1) selon la revendication 4 **caractérisé en ce que** la pièce de transmission d'effort (5A) vient de matière avec le levier (7).

6. Appareil (1) selon l'une des revendications 1 à 5 **caractérisé en ce qu'**il comprend au moins une biellette (8A) s'étendant entre une première extrémité (80A) reliée au couvercle (3) et une deuxième extrémité (80B) reliée à la pièce de transmission d'effort (5A) en un point formant la zone d'accrochage (P), ladite deuxième extrémité (80B) étant montée mobile relativement à la pièce de transmission d'effort (5A).

7. Appareil (1) selon la revendication 6 **caractérisé en ce que** la deuxième extrémité (80B) de la biellette (8A) est pourvue d'un premier tenon (81) tandis que la pièce de transmission d'effort (5A) est pourvue d'une lumière de guidage (50) accueillant ledit premier tenon (81), ce dernier étant monté à glissement au sein de ladite lumière de guidage (50).

8. Appareil (1) selon la revendication 7 **caractérisé en ce que** ladite lumière de guidage (50) s'étend longitudinalement entre une première et une seconde extrémité (50A, 50B), la distance séparant la première extrémité (50A) du premier axe (Y-Y') étant supérieure à celle séparant la seconde extrémité (50B) du premier axe (Y-Y'), le premier tenon (81) se trouvant vers la deuxième extrémité (50B) lorsque le couvercle (3) est en position de fermeture et vers la première extrémité (50A) lorsque le couvercle (3) est en position d'ouverture.

9. Appareil (1) selon l'une des revendications 1 à 8 **caractérisé en ce que** le couvercle (3) est un couvercle déformable susceptible d'évoluer entre une configuration géométrique de repos correspondant à sa position d'ouverture et une configuration géométrique déformée correspondant à sa position de fermeture, le passage d'une configuration à l'autre étant commandé par le moyen de commande (5) du déplacement du couvercle (3).

10. Appareil selon la revendication 9 **caractérisé en ce que** le couvercle (3) est un couvercle flexible.

## Claims

1. Pressurised cooking appliance (1) with recessed lid, comprising at least:
- a vessel (2) and a lid (3) designed to be attached on the vessel (2) with ability to move between at least on the one hand a closed position in which it forms with the vessel (2) a substantially sealed cooking chamber, and on the other an open position in which it enables the inside of the chamber to communicate with the outside,
- a means (5) of controlling the movement of the lid (3) between its closed and open positions, the said control means (5) comprising a force transmission piece (5A) mounted so as to pivot on a first axis (Y-Y'), the lid (3) being suspended in a zone (P) of attachment to the said force transmission piece (5A),
the said appliance (1) being **characterised in that** it comprises a means (23) for varying the distance (D) separating the attachment zone (F) from the first axis (Y-Y').

2. Appliance (1) according to claim 1, **characterised in that** the means (23) for varying the distance (D) separating the attachment zone (P) from the first axis (Y-Y') cooperates with the control means (5) in order to vary the said distance (D) according to the position of the control means (5).

3. Appliance (1) according to claim 1 or 2, **characterised in that** the means for varying the distance (D) separating the attachment zone (P) from the first axis (Y-Y') is designed so that the said distance (D) decreases when the lid (3) passes from its open position to its closed position.

4. Appliance (1) according to one of claims 1 to 3, **characterised in that** it comprises a clamp (6) intended to come into abutment on the vessel (2), the control means (5) comprising a manually actuatable lever (7) mounted so as to pivot relative to the clamp (6) on the first axis (Y-Y') between a first position corresponding to the closed position of the lid (3) and a second position corresponding to the open position of the lid (3), the force transmission piece (5A) being secured to the lever (7).

5. Appliance (1) according to claim 4, **characterised in that** the force transmission piece (5A) is made in one piece with the lever (7).

6. Appliance (1) according to one of claims 1 to 5, **characterised in that** it comprises at least one link (8A) extending between a first end (80A) connected to the lid (3) and a second end (80B) connected to the force transmission piece (5A) at a point forming the attachment zone (P), the said second end (80B) being mounted so as to be able to move relative to the force transmission piece (5A).

7. Appliance (1) according to claim 6, **characterised in that** the second end (80B) of the link (8A) is provided with a first tenon (81) while the force transmission piece (5A) is provided with a guidance aperture (50) accommodating the said first tenon (81), the latter being slidably mounted within the said guidance aperture (50).

8. Appliance (1) according to claim 7, **characterised in that** the said guidance aperture (50) extends longitudinally between a first and a second end (50A, 50B), the distance separating the first end (50A) from the first axis (Y-Y') being greater than that separating the second end (50B) from the first axis (Y-Y'), the first tenon (81) being situated towards the second end (50B) when the lid (3) is in the closed position and towards the first end (50A) when the lid (3) is in the open position.

9. Appliance (1) according to one of claims 1 to 8, **characterised in that** the lid (3) is a deformable lid able to change between an idle geometric configuration corresponding to its open position and a deformed geometric configuration corresponding to its closed position, the passage from one configuration to the other being controlled by the means (5) of controlling the movement of the lid (3).

10. Appliance according to claim 9, **characterised in that** the lid (3) is a flexible lid.

## Patentansprüche

1. Vorrichtung zum Kochen unter Druck (1) mit einem einführbaren Deckel, die zumindest Folgendes aufweist:
- einen Behälter (2) und einen Deckel (3), der zum Aufsetzen in dem Behälter (2) mit einer Bewegungsfähigkeit zwischen zumindest einerseits einer Schließposition, in der er mit dem Behälter (2) einen im Wesentlichen dichten Kochraum ausbildet, und andererseits einer Öffnungsposition, in der er eine Verbindung des Inneren des Raums nach außen erlaubt, bestimmt ist,
- ein Steuerungsmittel (5) zum Versetzen des Deckels (3) zwischen seiner Schließposition und seiner Öffnungsposition, wobei das Steuerungsmittel (5) ein Kraftübertragungsstück (5A) hat, das gemäß einer ersten Achse (Y-Y') schwenkbar montiert ist, wobei der Deckel (3) in einem Kopplungsbereich (P) an dem Kraftübertragungsstück (5A) aufgehängt ist,
wobei die Vorrichtung (1) **dadurch gekennzeichnet ist, dass**
sie ein Mittel (23) zum Variieren des den Kopplungsbereich von der ersten Achse (Y-Y') trennenden Abstands (D) aufweist.

2. Vorrichtung (1) nach Anspruch 1, **dadurch gekennzeichnet, dass** das Mittel (23) zum Variieren des den Kopplungsbereich von der ersten Achse (Y-Y') trennenden Abstands (D) mit dem Steuerungsmittel (5) zum Variieren des Abstands (D) entsprechend der Position des Steuerungsmittels (5) zusammenwirkt.

3. Vorrichtung (1) nach Anspruch 1 oder 2, **dadurch gekennzeichnet, dass** das Mittel zum Variieren des den Kopplungsbereich (P) von der ersten Achse (Y-Y') trennenden Abstands (D) bestimmt ist, den Abstand während des Übergangs des Deckels (3) von seiner Öffnungsposition in seine Schließposition zu verringern.

4. Vorrichtung (1) nach einem der Ansprüche 1 bis 3, **dadurch gekennzeichnet, dass** sie einen Bügel (6) aufweist, der bestimmt ist, in Kontakt mit dem Behälter (2) zu kommen, wobei das Steuerungsmittel (5) einen Hebel (7) hat, der manuell betätigbar ist und relativ zu dem Bügel (6) um die erste Achse (Y-Y') zwischen einer ersten Position entsprechend der Schließposition des Deckels (3) und einer zweiten Position entsprechend der Öffnungsposition des Deckels (3) schwenkbar montiert ist, wobei das Kraftübertragungsstück (5A) mit dem Hebel (7) fest verbunden ist.

5. Vorrichtung (1) nach Anspruch 4, **dadurch gekennzeichnet, dass** das Kraftübertragungsstück (5A) mit dem Hebel (7) einstückig ausgebildet ist.

6. Vorrichtung (1) nach einem der Ansprüche 1 bis 5, **dadurch gekennzeichnet, dass** sie zumindest eine Stange (8A) aufweist, die sich zwischen einem ersten Ende (80A), das an dem Deckel (3) angebracht ist, und einem zweiten Ende (80B), das an dem Kraftübertragungsstück (5A) bei einem Punkt, der den Kopplungsbereich ausbildet, angebracht ist, erstreckt, wobei das zweite Ende (80B) im Bezug auf das Kraftübertragungsstück (5A) beweglich montiert ist.

7. Vorrichtung nach Anspruch 6, **dadurch gekennzeichnet, dass** das zweite Ende (80B) der Stange (8A) einen ersten zapfen (81) aufweist, wohingegen das Kraftübertragungsstück (5A) eine Führungsöffnung (50) hat, die den ersten Zapfen (81) aufnimmt, der in der Führungsöffnung (50) verschiebbar montiert ist.

8. Vorrichtung (1) nach Anspruch 7, **dadurch gekennzeichnet, dass** die Führungsöffnung (50) sich längs zwischen einem ersten und einem zweiten Ende (50A, 50B) erstreckt, wobei der das erste Ende (50A) von der ersten Achse (Y-Y') trennende Abstand größer als der das zweite Ende (50B) von der ersten Achse (Y-Y') Abstand ist, wobei der erste Zapfen (81) sich in Richtung des zweiten Endes (50B) befindet, wenn der Deckel (3) in der Schließposition ist, und sich in Richtung des ersten Endes (50A) befindet, wenn der Deckel (3) in der Öffnungsposition ist.

9. Vorrichtung (1) nach einem der Ansprüche 1 bis 8, **dadurch gekennzeichnet, dass** der Deckel (3) ein verformbarer Deckel ist, der zwischen einer geometrischen Ruhekonfiguration entsprechend seiner Öffnungsposition und einer geometrischen Verformungskonfiguration entsprechend seiner Schließposition bewegbar ist, wobei der Wechsel von der einen Konfiguration zu der anderen durch das Steuerungsmittel (5) durch Versetzung des Deckels (3) gesteuert wird.

10. Vorrichtung nach Anspruch 9, **dadurch gekennzeichnet, dass** der Deckel (3) ein flexibler Deckel ist.
